# FASCICULE DE BREVET EUROPEEN

(11) **EP 0 551 950 B1**
(45) Date de publication et mention de la délivrance du brevet: **29.04.1998**
(21) Numéro de dépôt: 93200083.9
(22) Date de dépôt: 13.01.1993
(51) Int. Cl.: H04N 1/32

(54) **Télécopieur vidéotex**
Videotext- und Faksimilegerät
Videotext and facsimile apparatus

(30) Priorité: 14.01.1992 FR 9200299
(43) Date de publication de la demande: 21.07.1993
(73) Titulaire: SOCIETE D'APPLICATIONS GENERALES D'ELECTRICITE ET DE MECANIQUE SAGEM, F-75783 Paris Cédex 16 (FR)
(72) Inventeur: Charbonnier,Philippe, F-78600 Maisons Lafitte (FR)
(74) Mandataire: Bloch, Gérard

(56) Documents cités:
- EP-A- 0 394 096
- WO-A-90/04299
- WO-A-92/14335
- GB-A- 2 232 324
- US-A- 4 953 199

## Description

La présente invention concerne un télécopieur comprenant un processeur, un modem, des moyens de liaison, par un transformateur, du modem à une ligne de transmission de données, des moyens de liaison à au moins un poste téléphonique principal, des moyens de liaison du poste téléphonique à la ligne de transmission de données, un module de reconnaissance de la nature d'appels entrants par au moins les fréquences des signaux reçus et une imprimante.

Les télécopieurs font aujourd'hui partie des équipements de bureau classiques, dont il est difficile de se passer. Leur utilisation dans un cadre domestique se développe d'ailleurs déjà. Parallèlement à ces appareils de télécopie, leurs usagers disposent d'autres équipements, comme des terminaux vidéotex.

Les télécopieurs classiques du type ci-dessus sont pourvus de moyens de reconnaissance de la nature d'appels entrants, leur permettant, en combinaison avec d'autres moyens, de discriminer les transmissions télécopie des communications téléphonie et d'aiguiller la ligne de transmission de données, a priori une ligne téléphonique, soit sur les organes de télécopie, dont le modem, soit sur le poste téléphonique. Ces télécopieurs sont aussi dotés d'une imprimante leur permettant, entre autres fonctions, d'assurer, en mode "copie locale", celle d'un équipement de photocopie.

Le modem de ces télécopieurs classiques est du type V21/V27ter/V29 des recommandations CCITT correspondantes.

Les terminaux vidéotex classiques, par exemple de la marque enregistrée Minitel, sont agencés pour recevoir des "écrans" d'un centre serveur et les afficher. Ils comprennent, à cet effet, et notamment, un processeur, un modem, des moyens de liaison à un poste téléphonique, un clavier et un écran.

Le modem de ces terminaux vidéotex classiques est du type V23 de la recommandation CCITT correspondante.

Les deux caractéristiques des télécopieurs rappelées ci-dessus ont donné l'idée à la demanderesse de vouloir les combiner fonctionnellement aux équipements aussi évoqués ci-dessus des terminaux vidéotex pour faire bénéficier ceux-ci de certains des moyens de ces télécopieurs et inversement.

La présente invention concerne un télécopieur du type défini ci-dessus, caractérisé par le fait que le modem est un modem combiné de télécopie et de vidéotex et qu'il est prévu des moyens agencés pour, en cas de liaison entre la partie de modem vidéotex et la ligne de transmission de données, saisir, par l'intermédiaire du transformateur, des événements sur la ligne et donc reconnaître leur nature et aiguiller ainsi la ligne sur la partie de modem télécopie ou la partie de modem vidéotex en fonction de la nature des événements.

Par événements, il faut entendre des transmissions de données ou de signaux fréquentiels, par exemple.

On remarquera que le document EP-A-0 394 096 n'enseigne qu'un modem vidéotex. Ce document décrit un moyen de transporter de l'information graphique dans le flux vidéotex mais le modem reste purement vidéotex ; ce n'est pas un modem combiné de télécopie et de vidéotex. Le circuit de détection de demande de transmission de données graphiques du document reconnaît la nature des données (caractères ou graphiques) transmises dans le flux vidéotex en tentant, en début de communication entrante, d'engager le protocole spécifique à l'échange de données graphiques et en constatant qu'il échoue. Il ne s'agit pas d'une saisie passive d'événéments en ligne, comme dans la présente demande. En outre, ledit circuit de détection ne provoque pas un aiguillage de la ligne vers la partie de modem télécopie ou la partie de modem vidéotex ; c'est toujours le même modem vidéotex qui est en ligne puisqu'il n'y a pas de modem télécopie.

Dans une première forme de réalisation du télécopieur, la ligne de transmission de données est une ligne téléphonique, les moyens de liaison sont agencés pour relier à la ligne téléphonique soit un terminal vidéotex, soit le modem du télécopieur, soit les deux.

L'invention concerne donc aussi l'association du télécopieur, dans cette première forme de réalisation, et d'un terminal vidéotex connecté entre le télécopieur et le poste téléphonique principal, sans utilisation de la prise péri-informatique du terminal vidéotex.

Dans ce cas, le terminal vidéotex partage la ligne téléphonique avec le télécopieur et le poste téléphonique, l'imprimante du télécopieur pouvant servir au terminal vidéotex.

Dans une seconde forme de réalisation, le télécopieur de l'invention comporte un clavier et un écran.

Dans ce cas, la fonction vidéotex est totalement intégrée au télécopieur. La ligne de transmission de données peut être une ligne du réseau téléphonique commuté (RTC) ou une ligne du réseau numérique à intégration de services (RNIS).

Dans une troisième forme de réalisation, le télécopieur de l'invention comporte des moyens de liaison directe à au moins un terminal non vidéotex et des moyens de liaison du terminal non vidéotex à la ligne de transmission de données de l'un des deux réseaux RTC et RNIS et lesdits moyens de saisie, de reconnaissance et d'aiguillage sont agencés pour, en cas de liaison entre le terminal non vidéotex et la ligne, aiguiller la ligne sur le télécopieur ou le terminal non vidéotex.

Le terminal non videotex peut être un répondeur-enregistreur.

Dans ce cas, le télécopieur peut être agencé pour, en cas d'appel entrant, ne prendre la ligne téléphonique qu'après un nombre de sonneries supérieur à celui au terme duquel le répondeur-enregistreur connecte ses moyens d'enregistrement-lecture à la ligne.

Le télécopieur, avantageusement, comporte des moyens de liaison directe à plusieurs terminaux.

Le télécopieur peut être agencé pour être isolé de la ligne et isoler celle-ci d'un répondeur-enregistreur.

Le télécopieur peut encore être agencé pour, en association avec un poste téléphonique et un répondeur-enregistreur étant relié à la ligne, aiguiller la ligne sur le poste téléphonique et isoler le répondeur-enregistreur.

L'invention sera mieux comprise à l'aide de la description suivante de plusieurs formes de réalisation du télécopieur de l'invention, en référence au dessin annexé, sur lequel :
- la figure 1 est une représentation schématique et structurelle d'une première forme de réalisation du télécopieur associé à un terminal vidéotex, un répondeur-enregistreur et un poste téléphonique secondaire et parallèle ;
- la figure 2 est un organigramme du fonctionnement du télécopieur de la figure 1 ; et
- la figure 3 est une représentation schématique et structurelle d'une seconde forme de réalisation du télécopieur à fonctions télécopie et vidéotex intégrées, relié à une ligne du réseau RTC et
- la figure 4 est une représentation schématique et structurelle d'une troisième forme de réalisation du télécopieur à fonctions télécopie et vidéotex intégrées, relié à une ligne du réseau RNIS.

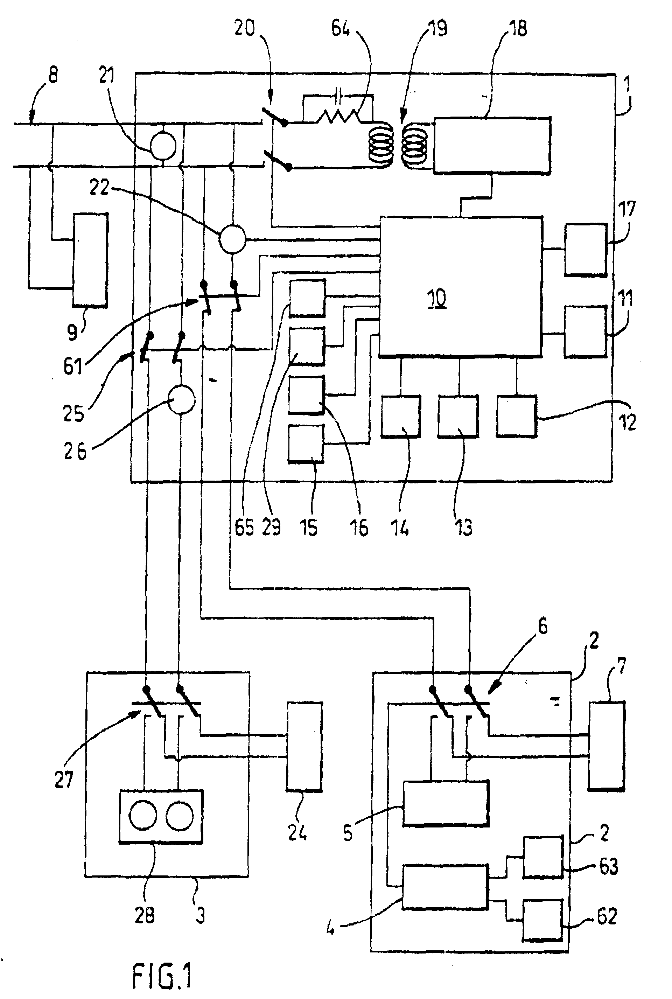

En référence à la figure 1, un télécopieur 1 de l'invention est ici associé à trois terminaux, un terminal videotex 2, en l'occurence de la marque enregistrée Minitel, bien connu de l'homme de métier, dans une version ordinaire sans imprimante, un répondeur-enregistreur 3, tout autant classique et répandu que le terminal 2, et un poste téléphonique secondaire parallèle 9. Le terminal 2 est agencé pour recevoir des "écrans" d'un centre serveur et les afficher. N'ont été représentés, sur la figure 1, comme éléments du terminal 2, que son processeur 4, son modem 5, son écran 62, son clavier 63 et un commutateur 6 de liaison du télécopieur 1 à un poste téléphonique principal 7 ou au terminal videotex 2.

Le télécopieur 1 est connecté à une ligne téléphonique 8 du réseau RTC et au poste principal 7 donc par l'intermédiaire du terminal 2. Le poste téléphonique secondaire 9, branché en parallèle sur la ligne 8, en "amont" du télécopieur 1, selon un câblage conventionnel, partage la ligne avec le télécopieur 1 et le poste principal associé 7.

Le télécopieur 1 comporte un processeur central 10 relié à une mémoire 11, un module d'analyse, ou scanner, 12, un générateur de caractères 13, une imprimante 14, une touche "début" 15, une touche "stop" 16, un inverseur réponse manuelle-réponse automatique 29, un module 17, à filtres programmables, de reconnaissance de la nature des appels entrants, pour la mise en oeuvre de la fonction d'aiguillage téléphonie-télécopie et, plus généralement, de la fonction tri des appels entrants, un modem 18, branché aux bornes de l'enroulement secondaire d'un transformateur 19, et d'autres éléments classiques d'un télécopieur, non utiles pour la compréhension de l'invention et par conséquent non représentés. Le modem 18 est un modem combiné de télécopie et de videotex comprenant donc ici les fonctions V23 d'un modem de terminal videotex et les fonction V21/27 ter/29 d'un modem de télécopieur classique.

Le module de reconnaissance 17 est agencé pour reconnaître la fréquence 1100 Hz des télécopieurs à numéroteur automatique, la fréquence 1300 Hz (hachée ou permanente) des serveurs videotex à appel automatique ainsi que l'absence de signaux vocaux. La ligne téléphonique 8 pénètre dans le télécopieur 1 et peut être dirigée, par un commutateur 20 commandé par le processeur 10, vers le modem 18 ou, par un commutateur 61 commandé par le processeur 10, vers le terminal 2 et le poste associé 7. Un indicateur d'appel, ou détecteur de sonneries, 21 est branché en parallèle sur la ligne 8, en "amont" du commutateur 20, et un détecteur de courant 22, qui peut être connecté en série avec le terminal 2 et le poste 7, entre le détecteur 21 et le commutateur 61, permet de déterminer si le poste 7 est en ligne ou au repos.

Le répondeur-enregistreur 3, auquel est ici aussi associé un poste téléphonique 24, peut être branché sur la ligne 8, en "amont" du commutateur 20 et, ici, en aval du détecteur 21, par l'intermédiaire d'un commutateur 25 et d'un second détecteur de courant 26, entre le commutateur 25 et le répondeur-enregistreur 3. Un commutateur 27, dans le répondeur-enregistreur 3, permet de connecter la ligne soit sur un organe d'enregistrement-lecture 28, symbolisé sur la figure 1 par une cassette, par simplicité, soit sur le poste 24.

A l'état de repos, le commutateur 20 est dans la position de la figure 1, qui isole la ligne 8 du modem 18 du télécopieur et connecte la ligne 8 au terminal 2 par le commutateur 61, et le commutateur 25 est dans la position, toujours de la figure 1, qui connecte la ligne 8 au répondeur-enregistreur 3.

Le télécopieur 1 est agencé pour trier les appels entrants.

Lorsque l'usager du télécopieur 1 est présent, par actionnement de l'inverseur 29, il bascule le télécopieur 1 en réponse manuelle pour l'isoler : le commutateur 20 reste dans sa position de repos et le commutateur 25 est activé pour isoler aussi le répondeur 3. Dans cet état, ni le télécopieur 1 ni le répondeur 3 ne peuvent répondre aux appels entrants. On notera que les répondeurs-enregistreurs sont pourvus d'une commande de basculement réponse manuelle/réponse automatique. Mais ici, les commandes de basculement des deux appareils 1 et 3 sont avantageusement regroupées en une seule sur le télécopieur. Dans cet état encore, les postes central 7 et parallèle 9 peuvent être utilisés de façon tout-à-fait normale.

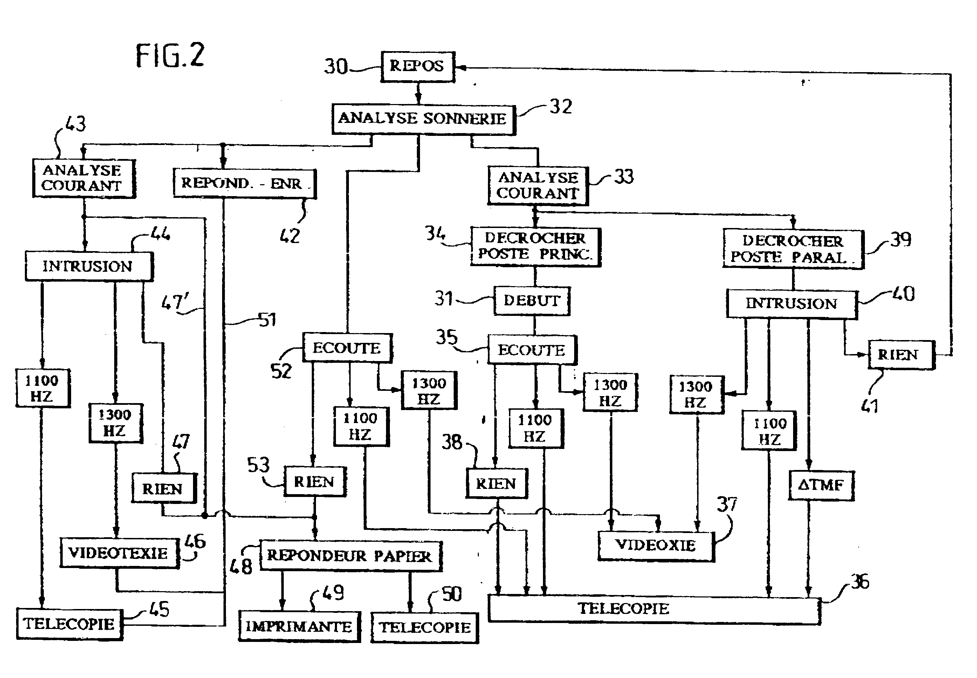

En référence à l'organigramme de la figure 2, si l'appel entrant est un appel non téléphonique, ou non vocal, et que l'usager a décroché le combiné du poste principal 7, il actionne 31 la touche "début" 15, le commutateur 20 passant en position active qui connecte la ligne 8 au modem 18. Auparavant, par l'analyse de sonnerie 32, par le détecteur 21, et l'analyse de courant 33, par le détecteur 22, le décrocher du poste principal 7 a été saisi 34 par le télécopieur (processeur 10). Le télécopieur reste en écoute 35 quelques instants, ici 5 secondes, et détermine la nature de l'appel. Il peut provenir d'un télécopieur à numéroteur automatique ou d'un serveur videotex à appel automatique.

Dans le premier cas, la fréquence 1100 Hz ayant été détectée par le module de reconnaissance 17, le processeur 10 est agencé pour que le télécopieur poursuive en télécopie 36 : le commutateur 20 reste en position active et le protocole normalisé T30, qui régit les échanges entre télécopieurs, est mis en oeuvre.

Dans le second cas, la fréquence 1300 HZ ayant été détectée par le module 17, le télécopieur 1, par la fonction V23 du modem 18 tente de reconnaître une application videotex qu'il sait traiter sans clavier ni écran, comme la téléimpression, abordée ci-après.

Dans l'affirmative, il poursuit ainsi, et par analogie avec les termes téléphonie et télécopie, dans un mode qu'on peut désigner par le néologisme "videotexie" 37.

Dans la négative, le télécopieur abandonne et relache le commutateur 20 qui retourne en position de repos. En réalité, un tel abandon n'est pas très grave, car, dans la situation examinée, l'usager est présent et les applications nécessitant un clavier ou un écran correspondent à des appels de l'usager et non l'inverse.

Dans un troisième cas 38, aucune fréquence particulière n'a été détectée au bout de 5 secondes et le télécopieur poursuit aussi en télécopie 36.

Si l'appel entrant est non vocal et que l'usager a décroché 39 le combiné du poste parallèle 9, par l'analyse de sonnerie 32 (la sonnerie disparait) et l'analyse de courant 33 (le détecteur 22 n'est pas activé), le décrocher du poste parallèle 9 a été saisi par le processeur 10 du télécopieur. Le télécopieur passe en intrusion parallèle 40, par basculement du commutateur 20 en position active, à l'écoute des signaux du poste parallèle 9 dont il détermine la nature. Il peut s'agir de signaux télématiques et de signaux de télécommande DTMF (dual tone multifrequency) émis par l'usager à partir d'une touche du poste parallèle 9 et reconnaissables par les filtres du module de reconnaissance 17.

L'usager n'a plus ensuite qu'à raccrocher le combiné du poste parallèle 9 avant que le télécopieur ne poursuive dans l'application reconnue.

En cas de détection d'une fréquence de 1100 Hz, le télécopieur poursuit en télécopie 36; en cas de détection d'une fréquence de 1300 Hz, il poursuit en videotexie 37 mais dans les seules applications qu'il sait traiter ; dans le cas d'un signal DTMF, le télécopieur peut poursuivre en télécopie 36. Si aucun des signaux précédents n'a été détecté 41 au bout, par exemple, de 15 secondes, le commutateur 20, dans l'exemple considéré, est basculé en position repos 30, le télécopieur considérant que le poste parallèle 9 reste en conversation vocale sur la ligne.

Ont jusqu'ici été abordées les fonctions du télécopieur assurant le tri parmi des signaux de nature vocale, télécopie ou télématique.

Lorsque l'usager du télécopieur 1 est absent, au moyen de l'inverseur 29, il bascule le télécopieur en réponse automatique, avec, pour effet, de mettre le commutateur 25 en position de repos et de liaison avec le répondeur-enregistreur 3, les commutateurs 20, 61 et 62 étant en position de repos 30.

Le répondeur-enregistreur 3, de structure classique, comporte un détecteur d'appel, non représenté, permettant, lorsque l'usager n'a pas décroché au bout de m sonneries, de faire basculer le commutateur 27 sur l'organe d'enregistrement-lecture 28.

Le télécopieur 1, à la mise en service, est réglé pour, en cas d'appel entrant, ne répondre, c'est-à-dire ne prendre l'appel, qu'au bout de n sonneries, n étant supérieur à m. Lorsque le répondeur-enregistreur 3 est en marche et qu'au bout de m sonneries, par un message classique, il accueille l'appel entrant 42, cette situation étant détectée par le processeur 10 du télécopieur 1, par un nombre de sonneries inférieur à n 32 et l'activation 43 du détecteur de courant 26, le télécopieur 1 passe en intrusion parallèle 44, par basculement du commutateur 20 en position active, à l'écoute des signaux du répondeur-enregistreur 3.

Dans le cas d'un message vocal, celui-ci est saisi 42 sur l'organe d'enregistrement 28 du répondeur-enregistreur 3.

En cas de détection d'une fréquence de 1100 Hz, le télécopieur poursuit en télécopie 45, le commutateur 20 restant en position active; en cas de détection d'une fréquence de 1300 Hz, il poursuit en videotexie 46, sans rebasculement du commutateur 20 en position de repos. Dans les deux cas, le processeur 10 du télécopieur rebascule le commutateur 25 en position active pour isoler 51 le répondeur-enregistreur 3 qui retournera de lui-même en position de repos peu après. Lorsque l'appelant n'émet aucun message vocal 47 ou qu'un message vocal a bien été saisi par le répondeur-enregistreur 3 qui a raccroché et dont la séquence a pris fin 47', cette situation est saisie par le télécopieur, après un silence ici de 8 secondes environ ou par le relachement du détecteur 26, et le télécopieur peut tenter de mettre en oeuvre 48 un mode d'exploitation dit "répondeur papier".

Le modem 18, par sa fonction videotexie V23, reçoit normalement les informations du serveur à une vitesse rapide (1200 bauds) et émet les siennes à une vitesse lente (75 bauds). Le processeur 10 du télécopieur 1 est agencé pour inverser les vitesses de réception et d'émission du modem 18 : en "mode opposé", l'émission d'informations par le modem 18 s'effectue à vitesse rapide, la réception d'informations, à vitesse lente.

La fréquence porteuse de la voie rapide du modem 18 est ici 1300 Hz, celle de la voie lente, 390 Hz. Le protocole T 30 évoqué ci-dessus définit notamment des trames normalisées et en particulier une trame DIS (digital identification signal) qui permet à un télécopieur appelé d'annoncer ses capacités normalisées (caractéristiques de son modem, codage, vitesse, format, capacité d'être relevé, ...). Lors donc de la tentative de mise en oeuvre du mode "répondeur papier", par l'intermédiaire de son modem 18, le processeur 10 commande le modem 18 en "mode opposé" et attend la porteuse retour, par conséquent à 390 Hz.

En cas de réception de cette porteuse retour dans un laps de temps ici de 12 secondes, une connexion videotex est établie et le télécopieur invite l'appelant à taper son message. Ce message est saisi 49 sur l'imprimante 14 du télécopieur 1, d'où la désignation de "répondeur papier" de cette application. Si la porteuse retour ne "converge" pas au bout du laps de temps considéré, le télécopieur entreprend 50 une dernière tentative de mettre en oeuvre le mode télécopie, laisse le commutateur 20 en position active et émet des trames DIS pendant ici 35 secondes.

La tentative répondeur-papier 48 n'est pas obligatoire et, lorsque l'appelant n'émet aucun message vocal 47, le télécopieur entreprend directement une dernière tentative du mode télécopie. Une chance a donc été donnée à toutes les applications, y compris, en dernier lieu, à la télécopie à appel manuel sans fréquence de 1100 Hz des télécopieurs à numéroteur automatique. La première a été donnée au répondeur-enregistreur 3, la seconde et la troisième à la réception d'un message d'un télécopieur à numéroteur automatique (1100 Hz) ou d'un serveur videotex (1300 Hz), la quatrième, au répondeur papier et la cinquième, à la réception d'un message d'un télécopieur à appel manuel.

Au plan opératoire, toujours dans le cas où le répondeur-enregistreur est en marche et qu'il accueille un appel entrant au bout de m sonneries, le message d'accueil du répondeur-enregistreur 3 invite l'appelant à laisser un message parlé, une télécopie, en lançant son télécopieur, ou un message videotex, en appuyant sur la touche connexion de son terminal.

En cas de message parlé enregistré sur le répondeur-enregistreur 3, après que l'appelant ait raccroché, et sans qu'il n'en sache rien, des tentatives de répondeur papier et de télécopie seront effectuées.

Si l'appelant est équipé d'un terminal videotex, après le message d'accueil, il pourra appuyer sur la touche connexion de son terminal, en recherche de la fréquence porteuse à 1300 Hz, ce qui crée le silence de 8 secondes au terme duquel le télécopieur 1 lance le mode répondeur-papier.

Si l'appelant est l'usager d'un télécopieur, il lance son télécopieur en mode télécopie, dont la mise en oeuvre sera retardée par la tentative de répondeur papier du télécopieur appelé 1 mais sera quand même effectuée avant le chien de garde de son télécopieur, qui est une temporisation normalisée.

Quant aux appels automatiques, caractérisés par une fréquence de 1100 ou 1300 Hz, ils sont immédiatement détectés par le module de reconnaissance 17, le télécopieur 1 étant en intrusion parallèle, et aiguillés en conséquence.

S'il ne s'est rien passé au bout de n sonneries, cela signifie qu'il n'y a pas de répondeur ou qu'il y en a un mais qu'il est indisponible ou éteint. Dans ce cas, le télécopieur 1 prend l'appel par basculement du commutateur 20 en position active et procède à une écoute silencieuse 52 ici pendant 5 secondes. En cas de détection d'une fréquence de 1100 Hz, le télécopieur 1 poursuit en télécopie 36; en cas de détection d'une fréquence de 1300 Hz, il poursuit en videotexie 37 toujours pour les applications qu'il sait traiter. Si au bout de 5 secondes, aucun signal n'a été détecté 53, le télécopieur 1 fait une tentative de répondeur papier 48, comme dans le cas de l'émission d'un message d'accueil par le répondeur-enregistreur 3.

Si, bien que l'installation soit en mode réponse automatique, l'usager rentre et décroche avant que le répondeur-enregistreur ou le télécopieur ne l'ait fait (m ou n sonneries), le télécopieur 1 se comporte comme en réponse manuelle. S'il ne s'agit pas d'un appel téléphonique et qu'il a décroché le combiné du poste principal 7, il peut "rendre la main" en actionnant la touche début 15. S'il a décroché le combiné du poste parallèle 9, il peut rendre la main au télécopieur 1 en laissant passer les signaux télématiques ou en actionnant la touche de télécommande DTMF puis en raccrochant.

Les répondeurs-enregistreurs du commerce permettent généralement l'écoute sur haut-parleur et la reprise de la communication par l'usager sur le poste associé (24), reprise qui est détectée par l'appareil et provoque son retour au repos. Avec le télécopieur qui vient d'être décrit, cette possibilité existe aussi; mais on peut faire l'économie du poste associé 24. A cet effet, on prévoit d'effectuer la reprise de la communication sur le poste principal 7 tout en actionnant la touche stop 16 du télécopieur 1. Celui-ci quitte alors l'état d'intrusion parallèle dans lequel il se trouvait, avec basculement du commutateur 20 en position de repos, activation du détecteur de courant 22, et, le temps de la communication, activation du commutateur 25 pour isoler le répondeur-enregistreur 3 qui se met ensuite à l'état de repos.

Les intrusions parallèles 40 et 44 ont été décrites comme une connexion du télécopieur à la ligne par activation du commutateur 20. Ceci est possible mais présente le léger inconvénient d'atténuer légèrement les signaux de parole et de dériver une partie du courant de ligne. Une intrusion en haute impédance évite cet inconvénient ; elle peut s'effectuer, par exemple, en actionnant dans les états 40 et 44 non seulement le commutateur 20 mais également deux autres, non représentés, l'un coupant le chemin du courant de ligne, en coupant la résistance 64 située entre le transformateur 19 et le commutateur 20, l'autre commutant la résistance d'adaptation du modem 18 de la valeur normale à une valeur élevée.

En ce qui concerne les appels sortants, chacun des appareils de l'association peut prendre à volonté la ligne 8 si elle est libre. Le terminal videotex 2 peut l'obtenir, par le poste 7 et une touche de connexion, non représentée, sur le terminal, pour le basculement du commutateur 6, sauf si le télécopieur 1 est en ligne, les commutateurs 20 et 61 étant en position active. Le télécopieur 1 s'abstient de procéder à des appels automatiques si les détecteurs 22, 26 sont activés. Lorsque le télécopieur 1 tente un appel sortant, il s'assure de la présence de la tonalité d'invitation à numéroter et, s'il ne l'a pas, raccroche rapidement, le poste parallèle 9 pouvant par exemple être en ligne. Le poste 24, ici associé au répondeur-enregistreur 3, peut prendre la ligne si le télécopieur 1 ne l'a pas; il en résulte normalement un arrêt de la fonction enregistrement-lecture 28, en cas d'enregistrement. Le poste parallèle 9 peut prendre la ligne à tout instant mais l'usager devra déceler de lui-même une communication de données en cours pour raccrocher rapidement.

On a décrit diverses circonstances où était tentée l'application répondeur papier, en liaison étroite avec une tentative subséquente en télécopie. On peut évidemment en déduire des configurations restreintes où
- soit le répondeur papier ne serait pas offert ; on enchaînerait donc directement en tentative télécopie,
- soit la télécopie ne serait pas offerte à ce stade.

Va maintenant être décrit plus en détail le répondeur papier.

Soit donc les télécopieur 1 et terminal videotex 2 de la figure 1. Lorsque l'usager est absent et qu'un appel entrant arrive sur la ligne 8, le télécopieur 1 le prend et détermine s'il est destiné à une application qu'il sait reconnaitre. Dans le cas contraire, l'appel entrant ayant été émis par un terminal videotex, le télécopieur 1 procède à une tentative de répondeur papier.

Le processeur 10 se comporte en serveur en émettant en ligne un écran d'accueil. L'usager appelant, détectant la porteuse de la voie rapide du modem 18, connecte son propre terminal videotex, reçoit l'écran d'accueil du télécopieur 1 qui l'invite à taper un message sur le clavier de son terminal videotex. Le télécopieur 1 reçoit ce message. Grâce au générateur de caractères 13, qui fournit une image de ce message, celui-ci est imprimé sur l'imprimante 14 du télécopieur 1. Dans cette application, le télécopieur assure une fonction de répondeur-enregistreur télématique que l'usager, à son retour, peut consulter directement sans aucune manipulation.

Soit le cas où l'usager est en connexion vidéotex par le terminal vidéotex 2 relié à la ligne 8, c'est-à-dire après avoir appelé un serveur à l'aide du poste 7 et connecté le terminal videotex 2. Le télécopieur détecte cette connexion par le détecteur de courant 22. Le télécopieur 1 se connecte alors en intrusion parallèle sur le terminal 2 de préférence en haute impédance, par basculement du seul commutateur 20 en fonction active, le commutateur 61 restant à l'état de repos, c'est-à-dire fermé. A l'aide de la partie fonctionnelle V23 de son modem 18, le télécopieur suit le déroulement de la communication du terminal 2. Toutes les données affichées sur l'écran 62 du terminal 2 sont saisies et mémorisées par le télécopieur 1, écran après écran qui s'efface ensuite par écrasement de mémoire. Si l'usager veut imprimer un écran, il actionne une touche "impression" 65 sur le télécopieur 1 qui après décodage, imprime le dernier écran reçu, la communication du terminal vidéotex se poursuivant normalement.

Si le télécopieur 1 saisit un élément de protocole "DC imprimante" ou "DC télécopie" défini par les spécifications d'utilisation du réseau Minitel (STURM), c'est qu'un serveur veut commander une téléimpression vidéotex classique ou une téléimpression de document télécopie codé en vidéotex. Alors, le télécopieur 1 bascule le commutateur 61 en position active, pour isoler le terminal 2 de la ligne 8 et gérer seul la communication jusqu'à la fin. S'il était en haute impédance, il passe en basse impédance. Le télécopieur 1 émet en ligne l'acquittement "AC imprimante" ou "AC télécopie" et prend en charge les protocoles correspondant à l'une des deux applications jusqu'à la fin de la communication, en imprimant directement les documents envoyés par le serveur.

Le télécopieur qui vient d'être décrit est un télécopieur multifonctionnel, à modem aussi multifonctionnel (télécopie et vidéotexie), relié à une ligne téléphonique du réseau RTC et associé à un terminal vidéotex.

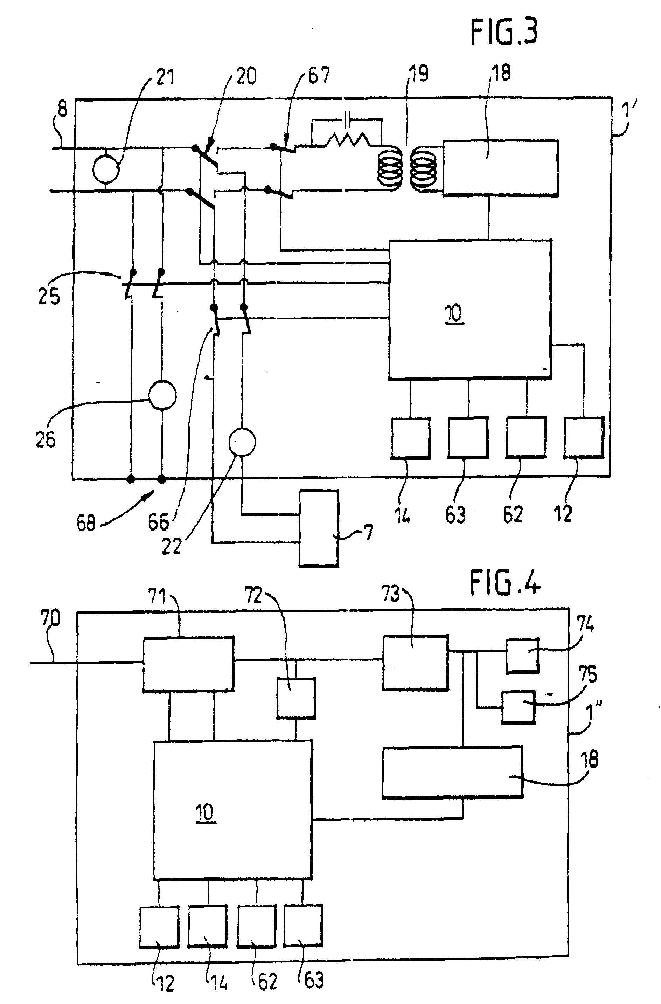

Va maintenant être décrit, en référence à la figure 3, un autre télécopieur multifonctionnel 1', toujours à modem multifonctionnel et relié à une ligne téléphonique du réseau RTC, mais à terminal vidéotex intégré. Par simplification, et surtout dans un souci de facilité de compréhension, les mêmes éléments resteront désignés par les mêmes références.

Comme le télécopieur 1, le télécopieur 1', relié à la ligne 8, comporte, notamment, le détecteur de sonneries 21, le commutateur 20, pour relier la ligne 8 soit au modem 18 soit au poste téléphonique 7, le détecteur de courant 22, le déctecteur de courant 26 et le commutateur 25 pour un répondeur-enregistreur extérieur à relier aux bornes 68, le processeur 10, le modem 18, le scanner 12, l'imprimante 14, mais aussi l'écran 62 et le clavier 63.

En outre, il est prévu un commutateur 67, entre le commutateur 20 et le transformateur 19 du modem 18, pour pouvoir connecter à la ligne un éventuel répondeur-enregistreur intégré, non représenté, et un commutateur 66, entre le commutateur 20 et le détecteur de courant 22, pour pouvoir connecter à la ligne un éventuel poste téléphonique intégré, non représenté.
Considérons d'abord le cas d'un répondeur-enregistreur extérieur branché aux bornes 68.

Le fonctionnement du télécopieur 1' est presque identique à celui du télécopieur 1. Il s'en distingue dans les cas suivants, par la levée des restrictions sur les applications videotex traitables.

Lorsque l'usager du télécopieur 1' est présent et qu'il a basculé 30 le télécopieur 1' en réponse manuelle, si l'appel entrant est un appel non téléphonique, que l'usager a décroché le combiné du poste 7, passé la main (début 31) et que la fréquence 1 300 Hz a été détectée, le processeur 10 maintient le commutateur 20 en position active pour maintenir la liaison entre la ligne 8 et le modem 18 pour que le télécopieur 1' puisse poursuivre en vidéotexie, et, naturellement, toutes applications de vidéotexie confondues.

Si l'appel entrant est non vocal, que l'usager a décroché 39 le combiné d'un poste parallèle, non représenté sur la figure 3 et que la fréquence 1 300 Hz a été reconnue, ici encore, le télécopieur 1' peut poursuivre en vidéotexie toutes applications confondues, comme d'ailleurs dans tous les autres cas où l'usager est absent, où il a basculé le télécopieur 1' en réponse automatique et où la fréquence 1 300 Hz a été reconnue.

En plus des fonctions susceptibles d'être assurées par le télécopieur 1, le télécopieur 1' peut assurer celle d'un éditeur de télécopie. Sous contrôle du processeur 10, l'usager, à l'aide du clavier 63 et de l'écran 62, peut saisir un message qui est ensuite mémorisé avant d'être converti en éléments d'image (pixels) et transmis à un correspondant usager d'un autre télécopieur. Dans cette application, le télécopieur est exploité en traitement de texte.

On notera que, contrairement au fonctionnement du télécopieur 1, avec le télécopieur 1', après commande par un serveur vidéotex et exécution par le télécopieur, d'une téléimpression, le dialogue interactif avec le serveur peut être poursuivi.

Considérons maintenant le cas d'un répondeur-enregistreur intégré au télécopieur 1'. Il ne se distingue du cas précédent que par le fait que, et en référence à la figure 2, les branches issues des étapes 43 et 52 sont fusionnées.

En résumé, le télécopieur 1', à terminal vidéotex intégré relié à une ligne téléphonique du réseau RTC, assure les fonctions suivantes :
- 1: Télécopie groupe G3,
- 2: vidéotexie classique,
- 3: téléphonie intégrée classique, amplifiée ou "mains libres",
- 4: réponse-enregistrement par répondeur-enregistreur intégré,
- 5: copie d'écran vidéotex,
- 6: réponse-enregistrement télématique type M12 ou sur papier,
- 7: téléimpression,
- 8: gestion d'un poste téléphonique parallèle,
- 9: gestion d'un répondeur-enregistreur extérieur,
- 10: gestion d'un répertoire de numéros abrégés commun à la télécopie, vidéotexie et téléphonie,
- 11: édition d'un journal commun des appels sortants,
- 12: édition télécopie,
- 13: tri des appels entrants.

Quant au télécopieur 1, à terminal vidéotex seulement associé, il assure les fonctions 1, 3, 4, 6 (papier), 8 et 9, à l'identique, et les fonctions 2, 5, 7 et 13, de façon modifiée, les fonctions 6 (M12), 10, 11, 12 lui étant interdites.

Va enfin être décrit, en référence à la figure 4, un autre télécopieur multifonctionnel 1'', toujours à modem multifonctionnel et à terminal vidéotex intégré, mais relié à une ligne de transmission 70 du réseau RNIS.

Le télécopieur 1'' comporte aussi un processur 10, un modem multifonctionnel 18, un scanner 12, une imprimante 14, un écran 62 et un clavier 63. En outre, il comporte une interface de réseau 71, reliée à un codeur-décodeur (codec) 73, auquel est relié le modem 18, un répondeur-enregistreur numérique 12, à la sortie de l'interface 71, un haut-parleur 74 et un microphone 75.

Sur la ligne RNIS peuvent être transmis deux canaux B à 64 kb/s, pour les données, et un canal D à 16 kb/s, pour la signalisation. Le processeur 10 gère la commance d'accès RNIS avec les protocoles de canal D, la communication sur canal B en mode transparent CCBT (commutation de circuits sur canal B transparente) jusqu'à 64 kb/s avec une pile de protocoles de télécopie G4 ou de vidéotexie haute vitesse, la communication sur canal B en mode non transparent CCBNT, à travers le codec 73 et le modem 18 avec des protocoles de télécopie G3 ou de vidéotexie basse vitesse. Le processeur 10 contrôle aussi les fonctions de téléphonie RNIS et répondeur-enregistreur numérique ainsi que les applications téléphonie et. vidéotexie sur RNIS.

Le télécopieur 1" assure les fonctions suivantes :
- 1 :: télécopie G3 en mode CCBNT et G4 en mode CCBT,
- 2 :: vidéotexie basse vitesse en mode CCBNT et haute vitesse en node CCBT,
- 3-7 :: les fonctions 3-7 assurées par le télécopieur 1',
- 8 :: le poste prallèle procède à une opération de transfert, classique avec le réseau RNIS,
- 9 :: la gestion d'un répondeur-enregistreur extérieur est ici sans intérêt,
- 10-12 :: les fonctions 10-12 assurées par le télécopieur
- 13 :: tri des appels entrants, comme avec le réseau RTC. En outre, les appels entrants CCTB peuvent être triés très facilement grâce à la signalisation RNIS, avec le signal BC (bearer capability),
- 14 :: édition et impression des appels entrants, avec numéros des appelants et leurs éventuels mini-messages SUU (signalisation d'usager à uaager RNIS).

## Revendications

1. Télécopieur comprenant un processeur (10), un modem (18), des moyens (20) de liaison, par un transformateur (19), du modem (18) à une ligne de transmission de données (8), des moyens de liaison à au moins un poste téléphonique principal (7), des moyens (6, 61) de liaison du poste téléphonique (7) à la ligne de transmission de données (8), un module (17) de reconnaissance de la nature d'appels entrants par au moins les fréquences des signaux reçus et une imprimante (14), caractérisé par le fait que le modem (18) est un modem combiné de télécopie et de vidéotex et qu'il est prévu des moyens (10) agencés pour, en cas de liaison entre la partie de modem vidéotex (18) et la ligne de transmission de données (8), saisir, par l'intermédiaire du transformateur (19), des événements sur la ligne (8) et donc reconnaître leur nature et aiguiller ainsi la ligne (8) sur la partie de modem télécopie ou la partie de modem vidéotex (18) en fonction de la nature des événements.

2. Télécopieur selon la revendication 1, dans lequel la ligne de transmission de données est une ligne téléphonique (8), les moyens de liaison sont agencés pour relier à la ligne téléphonique (8) soit un terminal vidéotex (2), soit le modem (18) du télécopieur, soit les deux.

3. Télécopieur selon la revendication 2, dans lequel les moyens de liaison comprennent, entre la ligne (8) et le modem (18), un premier commutateur (20) relié au modem (18) et un second commutateur (61) relié à la ligne (8) et destiné à être relié au terminal vidéotex (2).

4. Télécopieur selon l'une des revendications 1 à 3, associé à un terminal vidéotex (2) connecté entre le télécopieur (1) et le poste téléphonique principal (7).

5. Télécopieur selon la revendication 1, dans lequel il est prévu un écran (62) et un clavier (63).

6. Télécopieur selon la revendication 5, à fonction vidéotex intégrée.

7. Télécopieur selon la revendication 6, dans lequel la ligne de transmission de données (8) est une ligne du réseau téléphonique commuté RTC.

8. Télécopieur selon l'une des revendications 6 et 7, dans lequel il est prévu un premier commutateur (67), relié au modem (18), un deuxième commutateur (20), entre la ligne (8) et le premier commutateur (67), et un troisième commutateur (66), relié au second commutateur (20) et destiné à être relié au poste téléphonique principal (7).

9. Télécopieur selon la revendication 8, dans lequel il est prévu des moyens (10) pour, à l'aide du clavier (63), saisir un message, le mémoriser, le convertir en éléments d'image et le transmettre à un autre télécopieur.

10. Télécopieur selon l'une des revendications 1 à 9, dans lequel il est prévu des moyens (10) pour émettre en ligne un écran d'accueil, recevoir un message vidéotex et l'imprimer sur l'imprimante (14).

11. Télécopieur selon l'une des revendications 1 à 10, dans lequel il est prévu des moyens (25) de liaison directe à au moins un terminal non vidéotex (3) et des moyens de liaison du terminal non vidéotex à la ligne de transmission de données (8) de l'un des deux réseaux RTC et RNIS et lesdits moyens (10) de saisie, de reconnaissance et d'aiguillage sont agencés pour, en cas de liaison entre le terminal non vidéotex (3) et la ligne (8), aiguiller la ligne (8) sur le télécopieur (1;1') ou le terminal non vidéotex (3).

12. Télécopieur selon la revendication 11, dans lequel il est prévu des moyens (25) de liaison directe à un répondeur-enregistreur (3).

13. Télécopieur selon l'une des revendications 11 et 12, dans lequel, un poste téléphonique secondaire étant branché en parallèle sur la ligne (8), il est prévu des moyens (10) pour, en cas d'appel entrant et de décrocher au poste secondaire (9), passer en intrusion parallèle à l'écoute des signaux du poste secondaire (9) et reconnaître leur nature.

14. Télécopieur selon la revendication 6, dans lequel la ligne de transmission de données (8) est une ligne du réseau numérique à intégration de services RNIS.

15. Télécopieur selon la revendication 14, dans lequel il est prévu une interface de réseau (71) relié à un codeur-décodeur (73) aussi relié au modem (18).

16. Télécopieur selon la revendication 15, dans lequel un répondeur-enregistreur numérique (72) est relié à l'interface de réseau (71).

## Patentansprüche

1. Fernkopierer, umfassend einen Prozessor (10), ein Modem (18), Mittel (20) zum Verbinden, über einen Transformator (19), des Modems (18) mit einer Datenübertragungsleitung (8), Mittel für eine Verbindung mit zumindest einem Haupttelefon (7), Mittel (6, 61) zum Verbinden des Telefons (7) mit der Datenübertragungsleitung (8), ein Modul (17) zum Erkennen mit zumindest die Frequenzen der erhaltenen Signale der Art der eingehenden Anrufe, und einen Drucker (14), dadurch gekennzeichnet, daß das Modem (18) ein kombiniertes Fernkopierer- und Videotexmodem ist und daß Mittel (10) vorhanden sind, die dafür eingerichtet sind, im Fall einer Verbindung zwischen dem Videotexmodem des Modems (18) und der Datenübertragungsleitung (8) und über den Transformator (19), Ereignisse auf der Leitung (8) zu erfassen und somit deren Art zu erkennen und auf diese Weise die Leitung (8) in Abhängigkeit der Ereignisse auf den Fernkopiererteil oder den Videotexteil des Modems (18) zu schalten.

2. Fernkopierer nach Anspruch 1, dadurch gekennzeichnet, daß die Datenübertragungsleitung eine Telefonleitung (8) ist, wobei die Verbindungmittel dazu eingerichtet sind, die Telefonleitung (8) entweder mit einem Videotex-Terminal (2) oder mit dem Modem (18) des Fernkopierers oder mit beiden zu verbinden.

3. Fernkopierer nach Anspruch 2, dadurch gekennzeichnet, daß die Verbindungmittel zwischen der Leitung (8) und dem Modem (18) einen ersten Umschalter (20) umfassen, der mit dem Modem (18) verbunden ist, und einen zweiten Umschalter (61), der mit der Leitung (8) verbunden ist und dazu bestimmt ist, mit dem Videotex-Terminal (2) verbunden zu werden.

4. Fernkopierer nach einem der Ansprüche 1 bis 3, das einem Videotex-Terminal (2) zugeordnet ist, das zwischen den Fernkopierer (1) und das Haupttelefon (7) geschaltet ist.

5. Fernkopierer nach Anspruch 1, dadurch gekennzeichnet, daß ein Bildschirm (62) und eine Tastatur (63) vorgesehen sind.

6. Fernkopierer nach Anspruch 5, mit integrierter Videotex-Funktion.

7. Fernkopierer nach Anspruch 6, dadurch gekennzeichnet, daß die Datenübertragungsleitung (8) eine Leitung des kommutierten Telefonnetzes (Reseau Télephonique Commuté, RTC) ist.

8. Fernkopierer nach einem der Ansprüche 6 oder 7, dadurch gekennzeichnet, daß ein erster Umschalter (67) vorgesehen ist, der mit dem Modem (18) verbunden ist, ein zweiter Umschalter (20), zwischen der Leitung (8) und dem ersten Umschalter (67), und ein dritter Umschalter (66), der mit dem zweiten Umschalter (20) verbunden ist und dazu bestimmt ist, mit dem Haupttelefon (7) verbunden zu werden.

9. Fernkopierer nach Anspruch 8, dadurch gekennzeichnet, daß Mittel (10) vorgesehen sind, um mit Hilfe der Tastatur (63) eine Nachricht zu erfassen, zu speichern, in Bildelemente umzuwandeln und an einen anderen Fernkopierer zu übertragen.

10. Fernkopierer nach einem der Ansprüche 1 bis 9, dadurch gekennzeichnet, daß Mittel (10) vorgesehen sind, um auf der Leitung eine Empfangsmaske auszusenden, eine Videotex-Nachricht zu empfangen und auf dem Drucker (14) auszudrucken.

11. Fernkopierer nach einem der Ansprüche 1 bis 10, dadurch gekennzeichnet, daß Mittel (25) zur direkten Verbindung mit zumindest einem Nichtvideotex-Terminal (3) und Mittel zur Verbindung des Nichtvideotex-Terminals mit der Datenübertragungsleitung (8) eines der beiden Netze RTC oder RNIS (digitales Netz mit Integration von Dienstleistungen, Réseau Numérique a integration de services) vorgesehen sind, wobei die Mittel (10) zum Erfassen, zum Erkennen und zum Weiterschalten dazu eingerichtet sind, um,im Fall einer Verbindung zwischen dem Nichtvideotex-Terminal (3) und der Leitung (8), die Leitung (8) auf den Fernkopierer (1; 1') oder das Nichtvideotext-Terminal (3) zu schalten.

12. Fernkopierer nach Anspruch 11, dadurch gekennzeichnet, daß Mittel (25) zur direkten Verbindung mit einem Anrufbeantworter mit Aufnahmefunktion (3) vorgesehen sind.

13. Fernkopierer nach Anspruch 11 oder 12, dadurch gekennzeichnet, daß ein Nebentelefon parallel auf die Leitung (8) geschaltet ist, wobei Mittel (10) vorgesehen sind, um,im Falle eines eingehenden Anrufs und bei Abheben des Nebentelefons (9), ins parallele Eindringen überzugehen und die Signale des Nebentelefons (9) zuhören und ihre Art zu erkennen.

14. Fernkopierer nach Anspruch 6, dadurch gekennzeichnet, daß die Datenübertragungsleitung (8) eine Leitung des digitalen Netz mit Integration von Dienstleistungen (Réseau Numérique a integration de services, RNIS) ist.

15. Fernkopierer nach Anspruch 14, dadurch gekennzeichnet, daß ein Netzinterface (71) vorgesehen ist, das mit einem Kodierer/Dekodierer (73) verbunden ist, der auch mit dem Modem (18) verbunden ist.

16. Fernkopierer nach Anspruch 15, dadurch gekennzeichnet, daß ein digitaler Anrufbeantworter (72) mit Aufnahmefunktion mit dem Netzinterface (71) verbunden ist.

## Claims

1. Facsimile machine comprising a processor (10), a modem (18), means (20) for connecting, by a transformer (19), the modem (18) to a data transmission line (8), means for connection to at least one main telephone (7), means (6, 61) for connecting the telephone (7) to the data transmission line (8), a module (17) for recognising the nature of incoming calls by at least the frequencies of the signals received and a printer (14), characterised by the fact that the modem (18) is a combined facsimile and videotex modem and that means (10) are provided, which are arranged in order, in the case of a connection between the videotex modem part (18) and the data transmission line (8), to capture, by means of the transformer (19), events on the line (8) and thus to recognise their nature and thus to switch the line (8) to the facsimile modem part or the videotex modem part (18) depending on the nature of the events.

2. Facsimile machine according to Claim 1, in which the data transmission line is a telephone line (8), the connection means are arranged to connect to the telephone line (8) either a videotex terminal (2), or the modem (18) of the facsimile machine, or both.

3. Facsimile machine according to Claim 2, in which the connection means comprise, between the line (8) and the modem (18), a first switch (20) connected to the modem (18) and a second switch (61) connected to the line (8) and intended to be connected to the videotex terminal (2).

4. Facsimile machine according to one of Claims 1 to 3, associated with a videotex terminal (2) connected between the facsimile machine (1) and the main telephone (7).

5. Facsimile machine according to Claim 1, in which a screen (62) and a keyboard (63) are provided.

6. Facsimile machine according to Claim 5, with an integrated videotex function.

7. Facsimile machine according to Claim 6, in which the data transmission line (8) is a line of the switched telephone network (reseau téléphonique commuté RTC).

8. Facsimile machine according to one of Claims 6 and 7, in which is provided a first switch (67), connected to the modem (18), a second switch (20), between the line (8) and the first switch (67), and a third switch (66), connected to the second switch (20) and intended to be connected to the main telephone (7).

9. Facsimile machine according to Claim 8, in which means (10) are provided in order, by means of the keyboard (63), to capture a message, memorise it, convert it into image elements and transmit it to another facsimile machine.

10. Facsimile machine according to one of Claims 1 to 9, in which means (10) are provided in order to transmit on line a welcome screen, to receive a videotex message and print it on the printer (14).

11. Facsimile machine according to one of Claims 1 to 10, in which there are provided means (25) for direct connection to at least one non-videotex terminal (3) and means for connection of the non-videotex terminal to the data transmission line (8) of one of the two RTC and RNIS (digital network with integration of services, réseau numérique à integration de services networks and said means (10) for capture, recognition and switching are arranged in order, in the case of connection between the non-videotex terminal (3) and the line (8), to switch the line (8) to the facsimile machine (1, 1') or the non-videotex terminal (3).

12. Facsimile machine according to Claim 11, in which means (25) for direct connection to an answering machine (3) are provided.

13. Facsimile machine according to one of Claims 11 and 12, in which, a secondary telephone being connected in parallel on the line (8), means (10) are provided in order, in the case of an incoming call and lifting of the receiver at the secondary telephone (9), to pass with parallel intrusion to listening to the signals from the secondary telephone (9) and to recognise their nature.

14. Facsimile machine according to Claim 6, in which the data transmission line (8) is a line of the digital network with integration of services RNIS.

15. Facsimile machine according to Claim 14, in which a network interface (71) is provided, connected to a coder-decoder (73) also connected to the modem (18).

16. Facsimile machine according to Claim 15, in which a digital answering machine (72) is connected to the network interface (71).
